# FASCICULE DE BREVET EUROPEEN

(11) **EP 0 714 791 B1**
(45) Date de publication et mention de la délivrance du brevet: **10.03.1999**
(21) Numéro de dépôt: 95116632.1
(22) Date de dépôt: 21.10.1995
(51) Int. Cl.: B60B 21/06

(54) **Jante pour cycle munie d'éléments de guidage d'écrous**
Fahrradfelge, ausgerüstet mit Führungsmitteln für Schrauben
Rim for cycle provided wit screw guiding means

(30) Priorité: 02.12.1994 FR 9414749
(43) Date de publication de la demande: 05.06.1996
(73) Titulaire: MAVIC S.A., 01990 Saint-Trivier sur Moignans (FR)
(72) Inventeur: Mercat, Jean-Pierre, F-01990 Chaneins (FR); Minville, Alban, F-71570 Romaneche Thorins (FR)
(74) Mandataire: Lejeune, Benoit

(56) Documents cités:
- FR-A- 1 498 599
- FR-A- 2 378 642
- FR-A- 2 702 707

## Description

La présente invention concerne un nouveau type de jante pour cycles et est plus particulièrement relative à une jante profilée pour bicyclette.

Dans le cas des jantes tubulaires de roues de bicyclette, pour éviter que les écrous des rayons ne prennent appui que sur une seule épaisseur de métal, certaines jantes sont percées de part en part, d'autant de séries de trous coaxiaux que la roue doit compter de rayons ; qui sont ensuite équipés d'oeillets en deux parties serties entre elles.

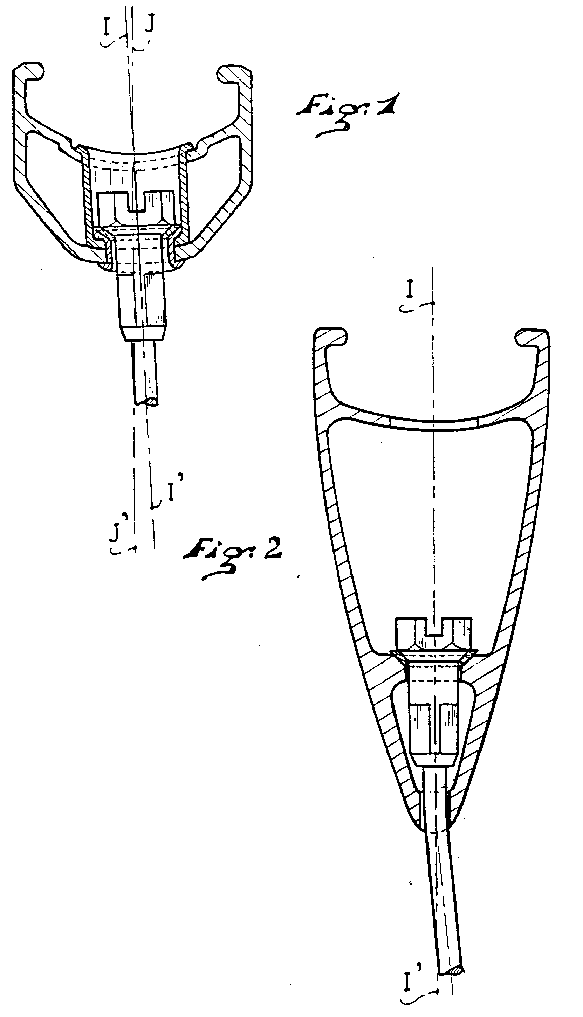

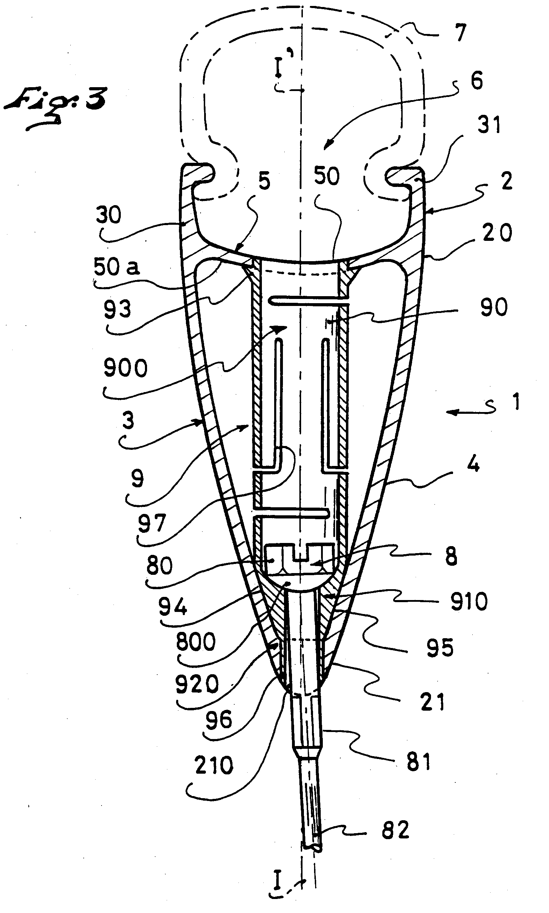

La figure 1 montre un exemple généralement utilisé pour une jante de profil commun sur laquelle est monté un rayon cette jante connue comportant notamment les caractéristiques définies dans le préambule de la revendication 1. L'oeillet est constitué en deux parties dont un élément supérieur, de gros diamètre, dont la tête est rabattue sur la face extérieure concave de la jante ; c'est-à-dire sur la partie supportant le pneumatique. L'autre extrémité est rabattue intérieurement pour servir d'appui à la tête d'un petit élément inférieur, dont l'autre extrémité est rabattue par sertissage sur la partie de la jante orientée vers le moyeu. Ce sertissage tend à réaliser le serrage du rebord de l'élément entre la paroi interne de la jante et la tête de l'élément inférieur sur laquelle prend appui l'écrou du rayon.

Comme le montre la figure 1, la ligne de perçage (I, I') est légèrement décalée par rapport au plan de symétrie de la jante (J, J') en fonction de l'inclinaison latérale des rayons sur le moyeu.

Le rôle de l'oeillet est ainsi de faciliter le montage des rayons pour réaliser la roue. Il permet un bon rotulage de la tête de l'écrou dans l'oeillet autorisant le rayon à prendre sa position inclinée sans contrainte de fléchissement. La surface de frottement lisse et l'absence d'oxydation de surface de l'oeillet confèrent des contraintes de frottement minimales avec la jante dans le temps. La roue est dans un équilibre statique dans lequel chaque rayon exerce une traction importante à la base de l'écrou sur la jante, et l'oeillet a pour fonction de répartir la pression de contact entre l'écrou et la jante afin d'augmenter sensiblement la résistance de la roue.

Aujourd'hui, la forme des jantes a tendance à se profiler pour certaines disciplines où le gain aérodynamique revêt de l'importance. Pour ce type de jante dite "profilée", la forme générale est celle d'un "Δ" renversé constitué de deux flancs de grande longueur, qui convergent et se rejoignent du côté du rayonnage et sont liés entre eux par un pont concave du côté du pneumatique.

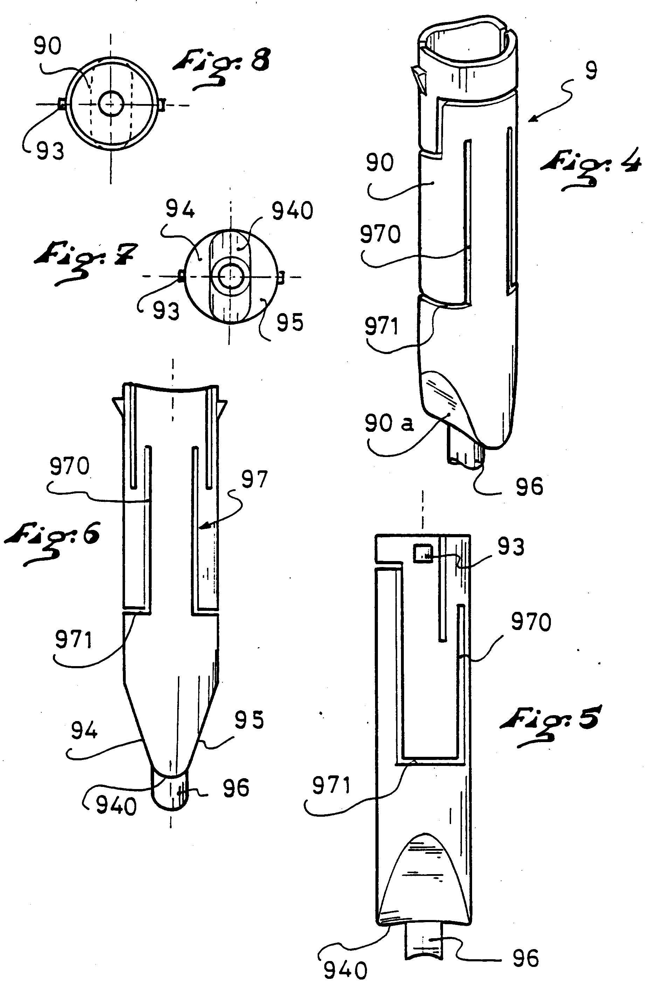

Une telle jante est illustrée à titre d'exemple à la figure 2. Dans ce cas, un oeillet tel que celui de la figure 1 ne peut pas être monté correctement. Notamment, il n'est pas possible de réaliser un rebord externe rabattu par sertissage, en raison de la base trop pointue de la jante. Lorsque ces jantes ne sont pas oeilletées, se posent alors des gros problèmes de résistance, des problèmes de montage en série et en automatique.

La figure 2 illustre le cas d'une jante profilée dans laquelle l'oeillet est remplacé par une simple rondelle qui prend appui sur les bords d'un pont intermédiaire partageant le profil en deux caissons distincts. Les parois du pont intermédiaire doivent être suffisamment épaisses pour supporter les contraintes de surpression, notamment en cas de choc latéral ou frontal sur la jante.

La constitution d'un tel pont conduit à alourdir sensiblement la jante de plusieurs dizaines de grammes ; ce qui est très préjudiciable pour ce type de jante.

Un autre inconvénient de ce type de jante est que la rondelle ne peut être disposée et maintenue en place qu'au moment du montage des rayons rendant ainsi cette opération plus fastidieuse et délicate.

Un autre inconvénient est que la tête d'écrou étant éloignée de l'extrémité effilée de la jante ; le corps de l'écrou ne peut traverser la jante. En conséquence, aucun réglage de tension des rayons n'est rendu possible extérieurement en cas de voilage de la roue par exemple.

Un autre inconvénient provient de l'éloignement entre la tête d'écrou et le point de sortie du rayon de la jante qui rend tout rotulage impossible. Aussi, le rayon doit subir un fléchissement de quelque degré en sortie de jante pour pouvoir être monté sur le corps de moyeu. Cette contrainte supplémentaire imposée au rayon n'est pas satisfaisante pour l'équilibre et la résistance générale de la roue.

Le but de la présente invention est d'apporter une solution satisfaisante au problème d'oeilletage de jante, notamment du type "profilée". Plus particulièrement, l'un des objets est d'améliorer la résistance de la jante et notamment la résistance à l'arrachement du rayon en cas de surtension temporaire lors d'un choc ou autre.

Un autre objet est de faciliter la prépose d'une pièce faisant office d'oeillet par des moyens automatiques et permettant la réalisation en série des jantes, notamment "profilées".

Un autre objet est de permettre un réglage aisé de la tension des rayons, y compris pour les jantes du type profilée.

Un autre objet de l'invention est d'améliorer le rotulage de l'écrou du rayon pour favoriser la position inclinée du rayon par rapport au plan de symétrie de la roue et faciliter ainsi le montage des rayons.

Pour atteindre ces objectifs, l'invention concerne une jante pour cycle comprenant un corps de révolution ayant en section radiale la forme d'un caisson creux de base supérieure plus large que sa base inférieure ; délimité par des flancs latéraux réunis par un ou plusieurs rebords ou ponts transversaux dont au moins un pont périphérique supérieur destiné à l'appui d'un pneumatique et traversé d'une part, par une pluralité de trous supérieurs de large section pour le passage des écrous de rayons ; ledit corps étant traversé, d'autre part, à sa base inférieure par une pluralité de trous inférieurs de plus petite section, espacés les uns des autres, destinés au passage des rayons ; lesdits trous inférieurs et supérieurs étant généralement coaxiaux suivant une ligne de perçage (I, I'), caractérisée en ce que la jante comprend également des éléments de guidage d'écrous logés à l'intérieur du caisson et localisés aux endroits des lignes de perçage (I, I') ; chaque élément de guidage étant muni de moyens de retenue logés à l'intérieur du corps de jante maintenant en place avant montage des rayons sur la jante l'élément de guidage par appui sur la surface inférieure et interne de l'un des rebords ou ponts transversaux.

Ainsi, les éléments de guidage peuvent être prémontés lors de la fabrication de la jante avant le rayonnage pour former la roue. La position interne des moyens de retenue des éléments de guidage solutionne le problème de sertissage d'un rebord externe sur la face pointue d'une jante profilée.

Selon une autre caractéristique de l'invention, chaque élément est pourvu d'un lamage de forme sensiblement tronconique ou de portion sphérique sur lequel est destiné à prendre appui un écrou de rayon ; ledit lamage étant maintenu au contact du fond de la base inférieure du corps de jante.

Ainsi, le rotulage est facilité par l'élément de guidage rapporté dont le lamage est situé à proximité du trou formé dans la jante pour le passage du rayon. L'élément de guidage permet une meilleure répartition des contraintes de traction exercées par le rayon, diminue l'effet de matage par l'écrou sur la jante et améliore ainsi la résistance de la jante et sa durabilité. De plus, le posage de l'élément est facilité puisqu'il vient directement en appui contre le fond de la jante.

Selon une caractéristique additionnelle, les moyens de retenue sont choisis parmi les moyens adaptés pour trou "borgnes" du type clipsage, agraffage par déformation ou par expansion d'une partie de l'élément de guidage à l'intérieur du corps de jante. De tels moyens autorisent un montage rapide et facilement automatisable des éléments de guidage à l'intérieur du corps de jante.

Selon une autre caractéristique de l'invention, l'élément de guidage a la forme générale d'un tube ayant un conduit traversant de part en part le corps de jante suivant la ligne de perçage (I, I') et qui relie les trous supérieurs aux trous inférieurs et en ce que les moyens de retenue font saillie par rapport à la surface externe du tube et prennent appui contre la surface interne du pont périphérique supérieur.

Dans une telle configuration, le guidage de la tête d'écrou lors du montage est facilité. La création d'un pont intermédiaire n'est pas nécessaire d'où l'obtention de jantes à la fois plus légères et aussi résistantes qu'une jante selon la figure 2 par exemple.

Selon une caractéristique plus précise de l'invention, le conduit comprend une portion supérieure tubulaire dont la section interne est déterminée pour permettre de guider la tête d'écrou lors de son passage du montage du rayon ; la portion supérieure étant reliée à une portion intermédiaire de rétrécissement constituant le lamage sur lequel prend appui la tête d'écrou ; elle-même reliée à une portion inférieure de section déterminée pour permettre le passage du corps d'écrou au travers du corps de jante. Un tel élément de guidage assure les fonctions de guidage d'écrou, de bon rotulage de la tête d'écrou et d'accès au réglage de l'écrou pour pouvoir contrôler la tension du rayon.

Selon une caractéristique complémentaire de l'invention, le corps présente la forme d'un caisson profilé en "Δ" renversé dont les flancs latéraux convergent progressivement l'un vers l'autre en direction de la base inférieure du caisson formant le corps de jante.

Une telle forme correspond à ce que l'on appelle jante "profilée" qui confère à la roue des caractéristiques aérodynamiques améliorées.

Selon une caractéristique de l'invention liée à la précédente, la partie inférieure de l'élément de guidage comprenant le lamage présente un profil extérieur de forme complémentaire au profil intérieur de la base inférieure rétrécie du caisson profilé.

Ainsi, l'élément de guidage s'adapte parfaitement au profil de jante et permet un rapprochement au plus près du lamage de l'extrémité rétrécie pour améliorer le rotulage du rayon dans la jante. De plus, les contraintes de traction se répartissent également mieux sur la base inférieure du caisson de résistance mécanique que constitue le corps de jante.

Selon une autre caractéristique complémentaire, la partie inférieure de l'élément de guidage se prolonge par une extrémité tubulaire de centrage qui s'engage dans le trou inférieur de la base inférieure du caisson du corps de jante. De ce fait, le positionnement et le centrage de l'élément de guidage s'en trouve amélioré.

Selon une autre caractéristique de l'invention, l'élément de guidage comprend une partie au moins élastiquement déformable radialement et/ou axialement.

Plus particulièrement, les parois de l'élément de guidage présentent une ou plusieurs entailles ou découpes orientées sensiblement longitudinalement et parallèlement à la ligne de perçage (I, I') pour l'élasticité radiale et/ou orientées sensiblement transversalement et perpendiculairement à (I, I') pour l'élasticité axiale.

Ainsi, l'élasticité permet de compenser les écarts de tolérance dimensionnelle accidentels dus, en particulier, à un phénomène d'usure des filières d'extrusion des profilés constituant le corps de jante. Cela permet également de pouvoir maintenir l'élément de guidage à l'intérieur du corps de jante dans un état légèrement précontraint pour éviter toute perte d'un élément à l'intérieur du corps ou à l'extérieur avant l'opération de montage des rayons.

D'autres caractéristiques et avantages de l'invention se dégageront de la description qui va suivre en regard des dessins annexés donnés à titre d'exemples non limitatifs.
La figure 1 est une vue en coupe radiale d'une jante tubulaire traditionnelle de bicyclette de l'art antérieur.
La figure 2 est une vue en coupe radiale d'une jante profilée de l'art antérieur.
La figure 3 est une vue en coupe radiale d'une jante profilée selon l'invention dans un des modes préférés.
La figure 4 est une vue en perspective de l'élément de guidage selon l'invention.
La figure 5 est une vue latérale de l'élément de guidage de la figure 4.
La figure 6 est une vue de face de l'élément de guidage de la figure 4.
La figure 7 est une vue de dessous de l'élément de guidage de la figure 4.
La figure 8 est une vue de dessus de l'élément de guidage de la figure 4.
Les figures 9 à 11 illustrent le montage de l'élément de guidage dans le corps de jante lors du clipsage.
La figure 12 est une vue en coupe radiale d'une jante profilée selon une variante de l'invention.
La figure 12a est une vue partielle selon la ligne A-A montrant un détail de l'invention.
La figure 12b est une vue partielle selon la ligne A-A selon une variante.
La figure 13 est une vue en perspective d'un élément de guidage selon une seconde variante.

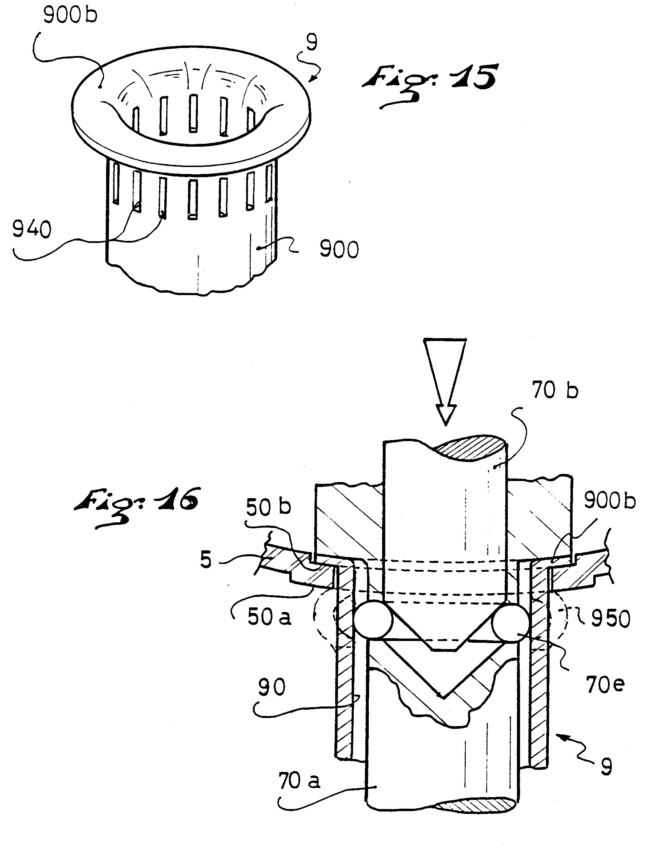

La figure 14 illustre le mode particulier de montage de l'élément de la figure 12.
La figure 15 est une vue en perspective d'un détail de l'élément de guidage selon une autre variante.
La figure 16 illustre un autre mode de montage lié à l'élément de guidage de la figure 14.
La figure 17 est une vue en coupe radiale d'une jante selon une autre variante de l'invention.
La figure 18 est une vue en perspective de détail d'un élément de guidage selon la variante de la figure 17 avant déformation.
La figure 19 illustre le montage de l'élément de guidage des figures 17 et 18.

Les figures 1 et 2 illustrent des exemples de jantes selon l'état de la technique actuel. Dans le cas de la figure 1, la jante a un profil traditionnel sur lequel est monté un oeillet en deux parties qui relie le pont supérieur périphérique du côté orienté vers le rayonnage. Les avantages d'une telle jante ont été cités précédemment.

Dans le cas de la figure 2, la jante est de forme profilée, au sens où l'entend le demandeur. Les flancs sont allongés et se rejoignent à leur extrémité inférieure du côté du rayonnage. A l'extrémité supérieure du profil, un pont périphérique lie les deux flancs. La structure comprend également un pont intermédiaire qui reçoit la tête de l'écrou. Le rayon est légèrement fléchi d'un certain angle θ de quelques degrés en raison du décalage axial de raccordement du rayon sur le moyeu. Aucun réglage de tension n'est possible de l'extérieur lorsque le pneumatique est monté sur la jante.

La jante (1) selon l'invention, illustrée sur la figure 3 en coupe radiale, est formée d'un corps (2) de révolution qui présente une structure en forme de caisson creux profilé ayant une base supérieure large (20) et une base inférieure effilée (21). Ce corps comprend deux flancs latéraux (3, 4) allongés, convergents et qui se rejoignent à la base inférieure du corps. A la base supérieure, les flancs (3, 4) sont reliés par un pont périphérique supérieur concave (5). Les flancs se prolongent éventuellement par deux rebords (30, 31) qui forment avec le pont (5), une cuvette de révolution (6) pour la réception du pneumatique (7). Le corps de jante est traversé de part en part de trous pour le montage des rayons selon une ligne de perçage (I, I'). Cette ligne peut être confondue avec le plan général de symétrie de la jante, perpendiculaire à l'axe du moyeu, comme c'est le cas dans l'exemple illustré, mais ce n'est pas obligatoire et l'on peut imaginer que l'axe (I, I') soit légèrement décalé tantôt d'un angle positif, tantôt d'un angle négatif de 5 à 8 degrés environ par rapport au plan général de symétrie pour tenir compte de l'orientation de chaque rayon. Toutefois, l'un des avantages de l'invention est de pouvoir se dispenser d'un tel décalage. La paroi du pont périphérique (5) comprend donc un trou (50) de section suffisante pour autoriser le passage d'un écrou (8) à l'intérieur du corps, et plus particulièrement la tête (80) de l'écrou qui constitue sa portion la plus large.

De même, l'extrémité effilée, à la base inférieure (21) du corps est également traversée par un trou (210) de section moindre pour le passage, tout au moins partiel, du corps d'écrou (81). Les trous supérieurs (50) et inférieurs (210) sont généralement coaxiaux selon la ligne (I, I').

Selon l'invention, à l'intérieur du corps de jante sont logés autant d'éléments de guidage (9) que de lignes de perçage (I, I') ou de rayons espacées régulièrement dans la jante. Généralement, le nombre de rayons sur une jante profilée peut varier entre 10 et 36 environ.

Dans le premier mode de l'invention, l'élément de guidage (9) a la particularité d'avoir une forme générale de tube avec un conduit (90) d'axe (I, I') qui traverse de part en part le corps de jante et relie les trous supérieurs (50) aux trous inférieurs (210). Le conduit (90) se divise en une première portion supérieure (900) dont la section est déterminée de façon à permettre le passage de la tête d'écrou (80) et assurer son guidage ; une portion intermédiaire de rétrécissement (910) qui constitue un lamage et une portion inférieure (920) de section inférieure à la section de la portion supérieure (900) pour permettre le passage du corps d'écrou (81) seulement. Le lamage (910) a une forme tronconique ou, de préférence est une portion de sphère, et coopère avec la surface inférieure (800) de la tête d'écrou (80) en forme de "goutte de suif".

Extérieurement, l'élément de guidage comprend des ergots rigides (93) qui font salle par rapport à la surface de la paroi tubulaire de la portion supérieure (900). Ces ergots constituent les moyens de retenue axiaux de l'élément dans le corps de jante. Ils prennent appui contre la surface interne (50a) du pont périphérique supérieur (5), sur les bords du trou supérieur (50).

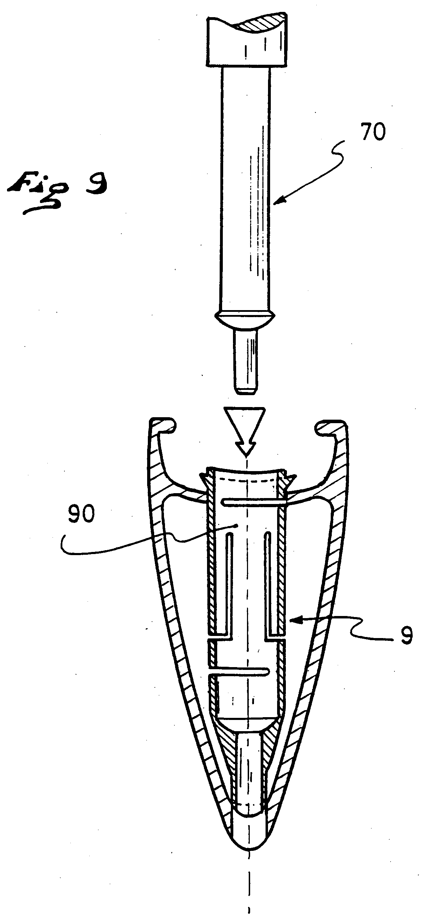

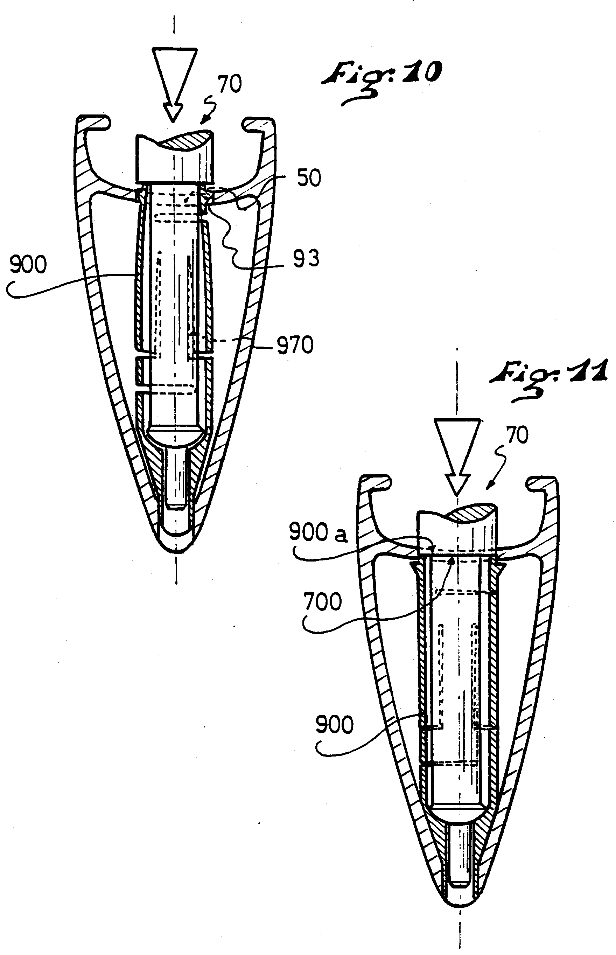

Comme le montrent les figures 4 à 8, les ergots sont au nombre de deux positionnés symétriquement sur le pourtour de la portion tubulaire.

Bien entendu, ceci n'est nullement limitatif, et l'on peut prévoir d'augmenter ce nombre et même de prévoir une bande en relief circulaire, comme moyen tout aussi équivalent par exemple.

Il faut noter que la longueur de la portion inférieure de section rétrécie (920) doit être la plus courte possible, en tout cas inférieure à la longueur de la portion supérieure (900), de sorte que le lamage (910) se trouve à proximité immédiate du trou inférieur (210), pour un meilleur rotulage et éviter tout fléchissement du rayon (82). De même, la section de cette portion inférieure (920) doit être suffisante pour compenser les écarts d'inclinaison θ par rapport à l'axe (I, I'), toujours en évitant tout point de fléchissement néfaste du rayon. Cette portion (920) peut être cylindrique ou, de préférence, légèrement tronconique avec une orientation de la partie évasée vers l'extérieur pour favoriser le rotulage du rayon.

Selon une caractéristique de l'invention, la partie inférieure externe (90a) de l'élément (9) présente un profil de forme complémentaire au profil intérieur de la base inférieure (21) rétrécie du caisson profilé.

Plus précisément dans l'exemple préféré, l'élément (9) en forme de tube comprend dans sa partie inférieure deux faces latérales (94, 95) convergentes qui prennent appui contre les surfaces latérales interne des flancs (3, 4) à la base inférieure du corps ; les deux surfaces latérales se rejoignent selon une arête ou un bombé légèrement concave (940) qui suit la courbure du profil de la jante. Ceci permet un rapprochement du lamage (910) au fond du corps de jante par rapport au trou inférieur (210).

Enfin, l'élément de guidage (9) se prolonge par une courte extrémité tubulaire (96) de centrage. Cette partie, de préférence cylindrique, s'engage dans le trou inférieur (210) de la base inférieure du caisson du corps de jante.

Les parois de l'élément de guidage sont traversées par une série d'entailles ou de découpes (97) différemment orientées pour donner de l'élasticité à la partie tubulaire (90), notamment pour permettre un débattement en compression radiale et axiale. Plus particulièrement, on distingue des entailles (970) orientées sensiblement longitudinalement et parallèlement à la ligne de perçage (I, I') pour un débattement en compression radiale de l'élément et des entailles (971) orientées sensiblement transversalement et perpendiculairement à la ligne (I, I') pour un débattement en compression de l'élément de guidage.

L'élément de guidage (9) peut être réalisé en différents matériaux tels qu'en alliage d'aluminium, en acier inoxydable, en plastique injecté, par exemple.

Toutefois, dans le mode préféré de l'invention, l'élément est réalisé dans un alliage d'aluminium, de zinc, magnésium et cuivre dénommé ZAMAC ®. L'emploi de ce matériau permet une injection sous pression de pièces d'une grande précision, à forte cadence et de façon économique. De plus, la densité du matériau est acceptable, de l'ordre de 6,8 environ ; ce qui n'est pas préjudiciable pour la masse totale de la jante compte tenu des faibles épaisseurs de parois des éléments (inférieure à 1 mm). En plus, ce matériau possède une bonne résistance au matage, ce qui est indispensable pour l'usage de l'invention.

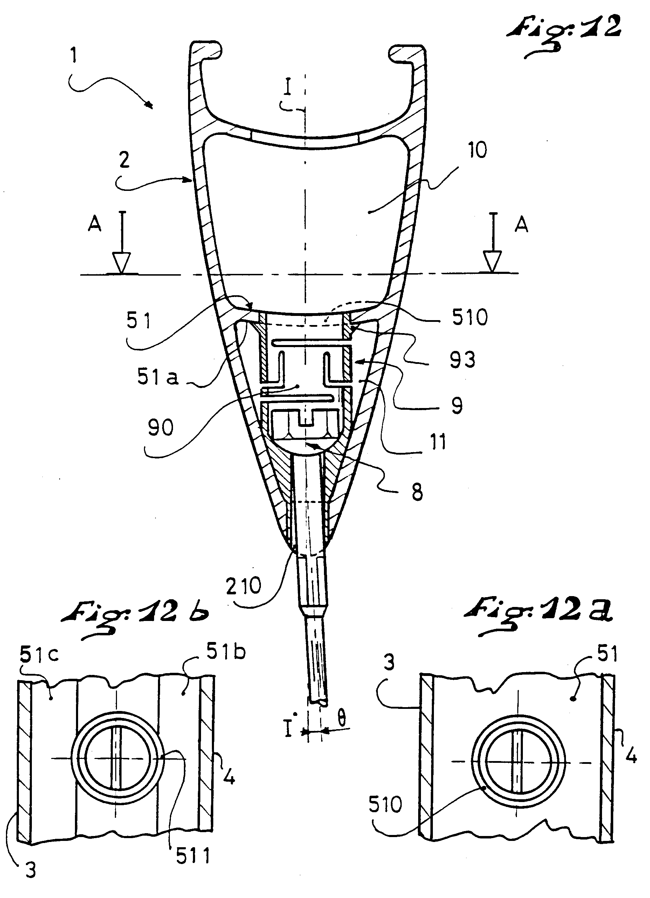

La méthode de montage de l'élément de guidage est illustré aux figures 9 à 11.

L'insertion de l'élément de guidage (9) dans le corps de jante se fait par clipsage élastique au moyen d'un pointeau (70) ayant une forme sensiblement complémentaire à celle du conduit (90).

A la figure 10, le passage des ergots (93) dans le trou supérieur (50) du pont périphérique, est facilité par la déformation élastique radiale de la portion tubulaire supérieure (900) grâce aux entailles (970) pratiquées.

La figure 11 montre l'engagement à fond du pointeau qui comprime l'élément longitudinalement par l'épaulement (700) du pointeau contre le bord périphérique supérieur (900a) de la portion tubulaire (900) de l'élément. Ainsi, le passage des ergots est facilité et l'élément peut être verrouillé dans une configuration légèrement précontrainte qui tient compte des écarts de tolérance du corps de jante sur toute sa périphérie ou d'une jante à l'autre ou encore des dilatations différentielles dues aux différents matériaux constituants la jante et l'élément.

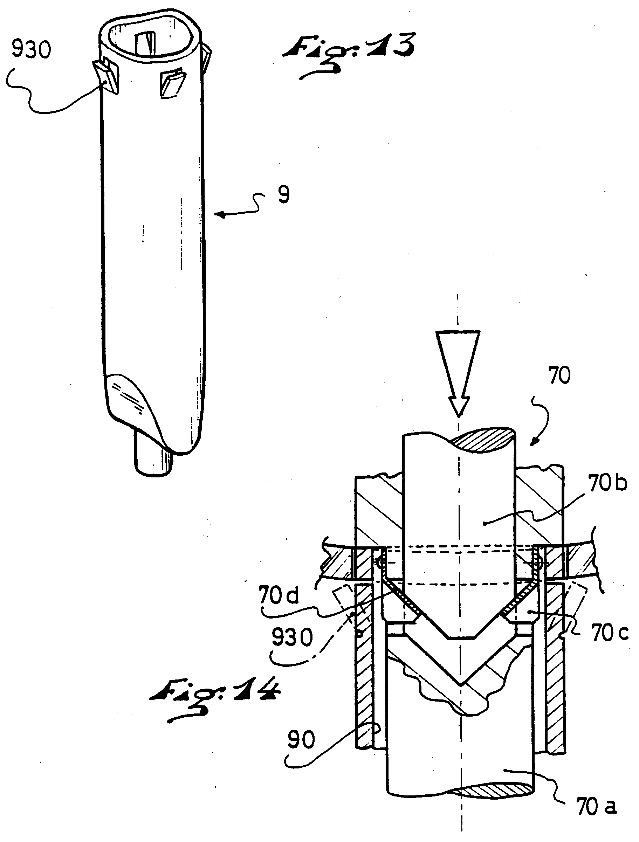

L'invention n'est pas limitée au seul mode précédemment décrit et la figure 12 illustre une variante possible de l'invention. Dans ce cas, l'élément de guidage (9) est raccourci par rapport au cas précédent. Le corps de jante (2) comprend un pont transversal intermédiaire (51) qui partage radialement le caisson en un volume supérieur (10) et un volume inférieur (11).

Le pont intermédiaire est traversé d'une pluralité de trous intermédiaires (510) coaxiaux par rapport à chaque ligne de perçage (I, I'). Les trous (510) ont une section suffisante pour permettre le passage des écrous de rayon (8). L'élément de guidage (9) a la forme générale d'un tube ayant un conduit (90) qui traverse de part en part le volume inférieur (11) suivant la ligne de perçage (I, I') et qui relie les trous intermédiaires (510) aux trous inférieurs (210). Les moyens de retenue, du type clipsage, constitués par les ergots (93) font saillie par rapport à la surface externe du tube et prennent appui contre la surface interne (51a) du pont intermédiaire (51).

La figure 12a illustre en vue en coupe selon la ligne A-A, la configuration du pont intermédiaire (51) traversé par les trous (510). Dans ce cas, le pont relie transversalement les flancs latéraux (3, 4).

Dans le cas de la figure 12b, au contraire, qui illustre une variante, le pont intermédiaire peut être remplacé par simplement deux rebords latéraux (51b, 51c) qui s'étendent transversalement mais ne sont pas reliés entre eux. Des encoches (511) réalisées dans chaque rebord aux endroits des lignes de perçage peuvent être réalisées pour le passage des moyens de retenue. Cette solution permet de réaliser un gain de poids non négligeable par rapport à la solution précédente.

La méthode de montage est similaire à celle expliquée pour le mode antérieur.

Comme le montre la figure 13 qui illustre une variante de l'élément de guidage (9) ; les moyens de retenue, du type agraffage, sont constitués de languettes ou agraffes plus ou moins élastiques (930) découpées dans la paroi de l'élément. Ces languettes ou agraffes sont, de préférence, prédécoupées lors de la fabrication de l'élément de guidage puis déployées par un outil spécialement adapté lors du montage de l'élément de guidage à l'intérieur du corps de jante.

L'outil (70) se compose d'une partie inférieure (70a) ayant la forme du pointeau des figures 9 à 11, qui s'insère dans le conduit (90) de l'élément de guidage pour l'introduire dans le corps de jante. Il comprend également une partie mobile interne ou poussoir (70b) qui est actionné après introduction complète de l'élément de guidage. Le poussoir (70b) dont l'extrémité est tronconique agit contre des organes périphériques de poussée (70c) qui se déplacent radialement pour déplier les languettes (930). Les organes (70c) sont montés élastiquement en étant solidaires de l'outil par des lames de ressort (70d) qui assurent leur retour dans leur position initiale et permettre un retrait de l'outil.

Selon une autre variante, illustrée aux figures 15 et 16, l'élément de guidage (9) comprend un moyen de retenue mis en oeuvre par expansion d'une partie de l'élément de guidage. Dans l'exemple précis illustré, la partie tubulaire supérieure (900) est affaiblie localement par une pluralité de fentes longitudinales (940) qui séparent une série de bandes longitudinales de matière.

A l'aide d'un outil adapté, du type à volume expansible, on monte l'élément de guidage à l'intérieur du corps de jante par déformation radiale des bandes de matière afin d'augmenter localement la section de l'élément de guidage à cet endroit au-delà de la section de chaque trou supérieur (50) du pont périphérique (5). Pour un meilleur maintien, l'élément de guidage présente, de préférence, un bord évasé supérieur (900b) qui prend appui dans un lamage (50b) de forme complémentaire réalisé sur la face externe du pont périphérique (5) pour former ainsi des bossages (950). Chaque bande (950) prend une configuration en relief et assure un maintien en position de l'élément de guidage (9) par appui sur la face interne (50a) du pont périphérique.

L'outil de montage (70) est illustré à titre d'exemple non limitatif à la figure 16. Il se compose d'une partie inférieure (70a) ayant la forme des pointeaux décrits précédemment, qui s'insère dans le conduit (90) de l'élément de guidage. Il comprend aussi une partie mobile ou poussoir (70b) comme dans le cas de la figure 13. Le poussoir (70b) agit directement sur un élément annulaire (70e) en matière déformable élastiquement, du type élastomère par exemple. Lorsque le poussoir est déplacé vers le bas, l'élément annulaire se déforme par augmentation de son diamètre et entraîne la déformation permanente des bandes (950). Lorsque le poussoir est ramené dans sa position initiale, l'élément annulaire reprend sa forme et l'outil peut être ressorti de l'élément de guidage ainsi solidarisé au corps de jante.

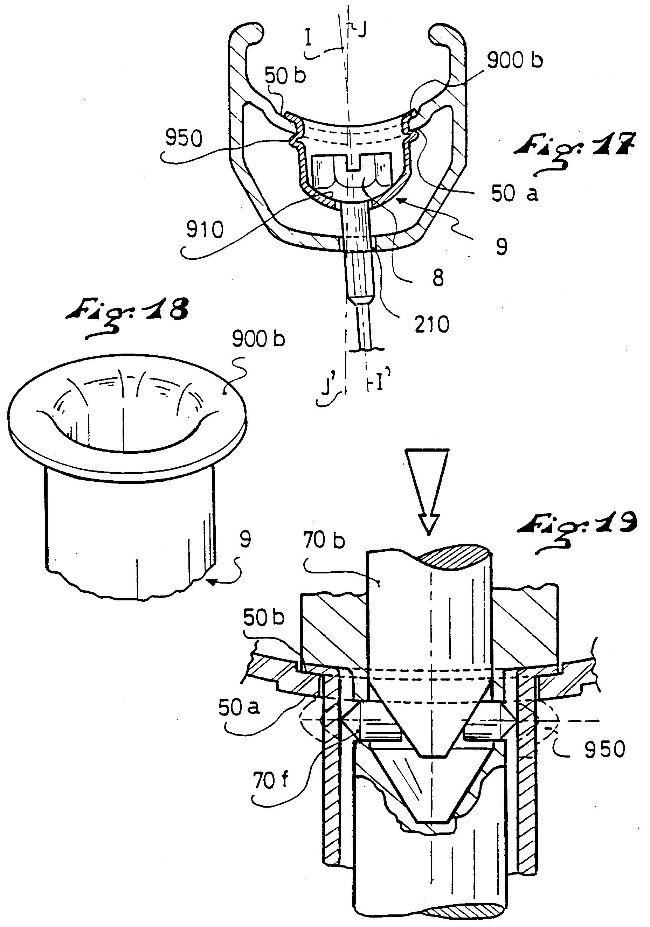

La figure 17 illustre une autre variante possible de l'invention. Dans ce cas particulier, l'élément de guidage (9) plus court ne traverse pas complètement le corps de jante. Il comprend des moyens de retenue dont des bossages (950) obtenus par déformation radiale à l'aide de poinçons sans découpage préalable. Il comprend un rebord supérieur (900b) qui prend appui dans un lamage (50b) de forme complémentaire de la face externe de pont périphérique (5). L'élément de guidage (9) comprend un fond (910) en forme de cuvette percée par un trou permettant un bon rotulage de l'écrou (8). Ce trou est de préférence coaxial avec le trou inférieur (210) du corps de jante selon l'axe (I, I') pour éviter tout fléchissement du rayon.

La figure 18 montre la partie supérieure de l'élément (9) avant déformation.

Le montage d'un tel élément dans le corps de jante s'effectue à l'aide d'un outil semblable à ceux précédement décrits à la différence que l'on préférera utiliser des poinçons (70f) radialement orientés et actionnés par le poussoir (70b).

L'élément de guidage des figures 17 et 18 s'applique plus particulièrement aux jantes de formes traditionnelles ou peu profilées.

Bien entendu, les modes de réalisation décrits et illustrés en particulier les moyens de retenue, ou encore les moyens permettant de rendre l'élément de guidage élastiquement déformable pour compenser certains écarts, constituent des solutions non limitatives et l'on peut imaginer d'autres solutions équivalentes entrant dans le cadre des revendications qui suivent.

## Revendications

1. Jante pour cycle comprenant un corps de révolution (2) ayant en section radiale la forme d'un caisson creux de base supérieure (20) plus large que sa base inférieure (21) , délimité par des flancs latéraux (3, 4) réunis par un ou plusieurs rebords ou ponts transversaux (5, 51) dont au moins un pont périphérique supérieur (5) destiné à l'appui d'un pneumatique (7) et traversé d'une part, par une pluralité de trous supérieurs (50) de large section pour le passage des écrous de rayons (8) , ledit corps étant traversé, d'autre part, à sa base inférieure (21) par une pluralité de trous inférieurs (210) de plus petite section, espacés les uns des autres, destinés au passage des rayons , lesdits trous inférieurs (210) et supérieurs (50) étant généralement coaxiaux suivant une ligne de perçage (I, I'), la jante comprenant également des éléments de guidage d'écrous (9) logés à l'intérieur du caisson et localisés aux endroits des lignes de perçage (I, I') , caractérisée en ce que chaque élément de guidage (9) est muni de moyens de retenue (93, 930, 950) logés à l'intérieur du corps de jante (2) maintenant en place avant montage des rayons (82) sur la jante l'élément de guidage (9) par appui sur la surface inférieure et interne (50a, 51a) de l'un des rebords ou ponts transversaux (5, 51).

2. Jante pour cycle selon la revendication 1, caractérisé en ce que chaque élément est pourvu d'un lamage (910) de forme sensiblement tronconique ou de portion sphérique sur lequel est destiné à prendre appui un écrou de rayon (8) ; ledit lamage étant maintenu au contact du fond de la base inférieure (21) du corps de jante.

3. Jante pour cycle selon la revendication 1 ou 2, caractérisé en ce que les éléments de retenue (93, 930) sont choisis parmi les moyens adaptés pour maintien à l'intérieur d'un trou "borgne" du type clipsage, agraffage, par déformation ou par expansion d'une partie de l'élément de guidage (9) à l'intérieur du corps de jante (2).

4. Jante pour cycle selon la revendication 1, 2 ou 3, caractérisée en ce que l'élément de guidage (9) a la forme générale d'un tube ayant un conduit (90) traversant de part en part le corps de jante (2) suivant la ligne de perçage (I, I') et qui relie les trous supérieurs (50) aux trous inférieurs (210) et en ce que les moyens de retenue (93, 930) font saillie par rapport à la surface externe du tube et prennent appui contre la surface interne (50a) du pont périphérique supérieur (5).

5. Jante pour cycle selon la revendication 4, caractérisée en ce que le conduit (90) comprend une portion supérieure tubulaire (900) dont la section interne est déterminée pour permettre de guider la tête d'écrou (80) lors de son passage du rayon (82) au montage ; la portion supérieure (900) étant reliée à une portion intermédiaire de rétrécissement (910) constituant le lamage sur lequel prend appui la tête d'écrou (80) ; elle-même reliée à une portion inférieure (920) de section déterminée pour permettre le passage du corps d'écrou (81) au travers du corps de jante (2).

6. Jante pour cycle selon l'une quelconque des revendications précédentes, caractérisée en ce que le corps (2) présente la forme d'un caisson profilé en "Δ" renversé dont les flancs latéraux (3, 4) convergent progressivement l'un vers l'autre en direction de la base inférieure (21) du caisson formant le corps de jante (2).

7. Jante pour cycle selon la revendication 6, caractérisée en ce que la partie inférieure externe (90a) de l'élément de guidage (9) comprenant le lamage (910) présente un profil de forme complémentaire au profil intérieur de la base inférieure rétrécie (21) du caisson profilé.

8. Jante pour cycle selon la revendication 7, caractérisée en ce que la partie inférieure de l'élément de guidage (9) se prolonge par une extrémité tubulaire de centrage (96) qui s'engage dans le trou inférieur (210) de la base inférieure (21) du caisson du corps de jante.

9. Jante pour cycle selon la revendication 1,2 ou 3, caractérisée en ce que le corps de jante (2) comprend un pont transversal intermédiaire (51) qui partage le caisson radialement en un volume supérieur (10) et un volume inférieur (11) ; ledit pont (51) étant traversé dans la ligne de perçage (I, I') d'une pluralité de trous intermédiaires (510) de large section pour le passage des écrous de rayon (8) ; chaque élément de guidage (9) ayant la forme générale d'un tube ayant un conduit (90) traversant de part en part le volume inférieur (11) suivant la ligne de perçage (I, I') et relie les trous intermédiaires (510) aux trous inférieurs (210) et en ce que les moyens de retenue (93) font saillie par rapport à la surface externe du tube et prennent appui contre la surface interne (51a) du pont intermédiaire (51).

10. Jante pour cycle selon l'une quelconque des revendications 2 à 9, caractérisée en ce que l'élément de guidage (9) comprend une partie au moins élastiquement déformable radialement et/ou axialement.

11. Jante pour cycle selon la revendication 10, caractérisée en ce que les parois de l'élément de guidage (9) présentent une ou plusieurs entailles (97, 970, 971) orientées sensiblement longitudinalement et parallèlement et/ou orientées sensiblement transversalement par rapport à la ligne de perçage (I, I').

12. Jante pour cycle selon l'une quelconque des revendications 5 à 11, caractérisée en ce que les moyens de retenue sont constitués d'ergots rigides (93) qui font saillie par rapport à la surface de la paroi tubulaire de la portion supérieure (900).

13. Jante pour cycle selon l'une quelconque des revendication 1, 2, 3 ou 4, caractérisé en ce que les moyens de retenue sont constitués de languettes ou d'agraffes (930).

14. Jante pour cycle selon la revendication 13, caractérisée en ce que les languettes sont prédécoupées lors de la fabrication de l'élément de guidage (9) puis déployées par un outil spécial.

15. Jante pour cycle selon l'une quelconque des revendications 1, 2, 3 ou 4, caractérisée en ce que les moyens de retenue sont constitués par des bossages (950) obtenus par déformation radiale de l'élément de guidage (9).

## Claims

1. Rim for a cycle comprising a body of revolution (2) having in radial cross-section the shape of a hollow casing with an upper base (20) wider than its lower base (21), demarcated by lateral sides (3, 4) connected by one or more edges or transverse bridges (5, 51) including at least one upper peripheral bridge (5) adapt to support a tire (7) and traversed, on the one hand, by a plurality of upper holes (50) having a large cross-section for the passage of the spoke nipples (8), said body being traversed, on the other hand, at its lower base (21) by a plurality of lower holes (210) having a smaller cross-section, spaced from one another, adapted to the passage of the spokes, said lower holes (210) and upper holes (50) being generally coaxial along a bore line (I, I'), the rim also comprising nipple guiding elements (9) housed inside the casing and placed in the areas of the boring lines (I, I'), characterized in that each guiding element (9) is provided with retaining means (93, 930, 950) housed inside the rim body (2) maintaining in place, before mounting the spokes (82) on the rim, the guiding element (9) by taking support on the lower and internal surface (50a, 51a) of one of the edges or transverse bridges (5, 51).

2. Rim for a cycle according to claim 1, characterized in that each element is provided with a countersink (910) having a substantially truncated conical shape or a spherical portion on which a spoke nipple (8) is adapted to take support; said countersink being maintained in contact with the bottom of the lower base (21) of the rim body.

3. Rim for a cycle according to claim 1 or 2, characterized in that the retaining elements (93, 930) are selected from the means of the clipping or stapling type adapted for holding inside a "blind" hole, by the deformation or expansion of one part of the guiding element (9) inside the rim body (2).

4. Rim for a cycle according to claim 1, 2 or 3, characterized in that the guiding element (9) has the general shape of a tube having a conduit (90) crossing the rim body (2) on both sides along the bore line (I, I') and connecting the upper holes (50) to the lower holes (210), and in that the retaining means (93, 930) project with respect to the external surface of the tube and take support on the internal surface (50a) of the upper peripheral bridge (5).

5. Rim for cycle according to claim 4, characterized in that the conduit (90) comprises one tubular upper portion (900) whose internal cross-section is predetermined to allow guiding the nipple head (80) during passage of the spoke (82) during mounting; the upper portion (900) being connected to an intermediate narrowed portion (910) constituting the countersink on which the nipple head (80) takes support; the latter being itself connected to a lower portion (920) having a predetermined cross-section to allow the passage of the nipple body (81) through the rim body (2).

6. Rim for a cycle according to any of the preceding claims, characterized in that the body (2) has the shape of an inverted "Δ"-shaped casing whose lateral sides (3, 4) converge progressively one towards the other in the direction of the lower base (21) of the casing that forms the rim body (2).

7. Rim for a cycle according to claim 6, characterized in that the external lower part (90a) of the guiding element (9) comprising the countersink (910) has a shape complementary to the inside shape of the lower narrowed base (21) of the shaped casing.

8. Rim for a cycle according to claim 7, characterized in that the lower part of the guiding element (9) is extended by a tubular centering end portion (96) which is engaged into the lower hole (210) of the lower base (21) of the casing of the rim body.

9. Rim for a cycle according to claim 1, 2 or 3, characterized in that the rim body (2) comprises an intermediate transverse bridge (51) which divides the casing radially in an upper volume (10) and a lower volume (11); said bridge (51) being traversed in the bore line (I, I') by a plurality of intermediate holes (510) having a wide cross-section for the passage of the spoke nipples (8); each guiding element (9) having the general shape of a tube with a conduit (90) traversing the lower volume (11) on both sides along the bore line (I, I') and connecting the intermediate holes (510) to the lower holes (210), and in that the retaining means (93) project with respect to the external surface of the tube and take support on the internal surface (51a) of the intermediate bridge (51).

10. Rim for a cycle according to any of claims 2-9, characterized in that the guiding element (9) comprises at least one part that is elastically deformable radially and/or axially.

11. Rim for a cycle according to claim 10, characterized in that the walls of the guiding element (9) have one or more notches (97, 970, 971) oriented substantially longitudinally and parallel and/or oriented substantially transversely with respect to the bore line (I, I').

12. Rim for cycle according to any of claims 5-11, characterized in that the retaining means are constituted of rigid lugs (93) that project with respect to the surface of the tubular wall of the upper portion (900).

13. Rim for a cycle according to any of claims 1,2,3 or 4, characterized in that the retaining means are constituted of tongues or staples (930).

14. Rim for a cycle according to claim 13, characterized in that the tongues are precut during the manufacture of the guiding element (9), then spread out by a special tool,

15. Rim for a cycle according to any of claims 1, 2, 3 or 4, characterized in that the retaining means are constituted by bosses (950) obtained by the radial deforming of the guiding element (9).

## Patentansprüche

1. Fahrradfelge, die einen Rotationskörper (2) aufweist, der im radialen Durchschnitt die Form eines hohlen Caisson mit einer oberen Basis (20) hat, die breiter als seine untere Basis (21) ist, und der durch seitliche Flanken (3,4) begrenzt ist, die durch einen oder mehrere Ränder oder transversale Brücken (5, 51) vereinigt sind, wobei zumindest eine obere periphere Brücke (5) zur Abstützung einer Luftbereifung (7) bestimmt ist und zum einen durch eine Vielzahl von oberen Löchern (50) mit großem Querschnitt für den Durchgang von Speichenmuttern (8) durchquert ist, wobei der Körper zum anderen an seiner unteren Basis (21) durch eine Vielzahl von unteren Löchern (210) mit kleinerem Querschnitt durchquert ist, die voneinander beabstandet sind und für den Durchgang der Speichen bestimmt sind, wobei die unteren (210) und oberen Löcher (50) im allgemeinen koaxial gemäß einer Bohrungslinie (I, I') sind und wobei die Felge auch Führungselemente für die Muttern (9) aufweist, die im Inneren des Caisson aufgenommen sind und an den Orten der Bohrungslinien (I, I') lokalisiert sind,
dadurch gekennzeichnet, daß
jedes Führungselement (9) mit Halteeinrichtungen (93, 930, 950) versehen ist, die im Inneren des Felgenkörpers (2) aufgenommen sind und das Führungselement (9) vor der Montage der Speichen (82) durch Abstützen auf der unteren und inneren Oberfläche (50a, 51a) eines der Ränder oder transversalen Brücken (5, 51) an Ort und Stelle halten.

2. Fahrradfelge gemäß Anspruch 1, dadurch gekennzeichnet, daß jedes Element mit einer Senkung (910) versehen ist, die eine im wesentlichen kegelstumpfartige Form oder einen sphärischen Abschnitt aufweist, auf dem eine Speichenmutter (8) Abstützung nimmt, wobei die Senkung in Kontakt mit dem Boden der unteren Basis (21) des Felgenkörpers gehalten ist.

3. Fahrradfelge gemäß Anspruch 1 oder 2, dadurch gekennzeichnet, daß die Halteelemente (93, 930) aus den für den Halt im Inneren eines 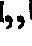 blinden" Loches geeigneten Einrichtungen vom Typ Clips, Klammer, durch Deformation oder durch Ausdehnung eines Teiles des Führungselementes (9) im Inneren des Felgenkörpers (2) ausgewählt sind.

4. Fahrradfelge gemäß'' Anspruch 1, 2 oder 3, dadurch gekennzeichnet, daß das Führungselement (9) die allgemeine Form eines Rohres aufweist, mit einem Kanal (90), der beidseitig den Felgenkörper (2) gemäß der Bohrungslinie (I, I') durchquert und der die oberen Löcher (50) mit den unteren Löchern (210) verbindet, und dadurch, daß die Halteeinrichtungen (93, 930) bezüglich der äußeren Oberfläche der Röhre vorstehen und Abstützung gegen die innere Oberfläche (50a) der oberen peripheren Brücke (5) nehmen.

5. Fahrradfelge gemäß Anspruch 4, dadurch gekennzeichnet, daß der Kanal (90) einen oberen röhrenförmigen Abschnitt (900) aufweist, dessen innerer Querschnitt so bestimmt ist, daß er erlaubt, den Kopf der Mutter (80) bei dem Durchgang der Speiche (82) bei der Montage zu führen, wobei der obere Abschnitt (900) mit einem Verengungs-Zwischenabschnitt (910) verbunden ist, der die Senkung bildet, auf der der Kopf der Mutter (80) Abstützung nimmt, und wobei er selbst mit einem unteren Abschnitt (920) verbunden ist, dessen Querschnitt so bestimmt ist, um den Durchgang des Körpers der Mutter (81) durch den Felgenkörper (2) zu erlauben.

6. Fahrradfelge gemäß einem der vorangehenden Ansprüche, dadurch gekennzeichnet, daß der Körper (2) die Form eines Caisson aufweist, der das Profil eines umgekehrten 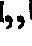 Δ" aufweist, dessen seitliche Flanken (3, 4) progressiv gegeneinander in Richtung der unteren Basis (21) des Caisson konvergieren, der den Felgenkörper (2) bildet.

7. Fahrradfelge gemäß Anspruch 6, dadurch gekennzeichnet, daß der untere äußere Teil (90a) des Führungselementes (9), der die Senkung (910) aufweist, ein Profil mit einer komplementären Form zu dem inneren Profil der unteren verengten Basis (21) des profilierten Caisson aufweist.

8. Fahrradfelge gemäß Anspruch 7, dadurch gekennzeichnet, daß der untere Teil des Führungselementes (9) sich durch ein röhrenförmiges Zentrierende (96) verlängert, das in dem unteren Loch (210) der unteren Basis (21) des Caisson des Felgenkörpers eingreift.

9. Fahrradfelge gemäß Anspruch 1, 2 oder 3, dadurch gekennzeichnet, daß der Fahrradkörper (2) eine transversale Zwischenbrücke (51) aufweist, die den Caisson radial in ein oberes Volumen (10) und ein unteres Volumen (11) teilt, wobei die Brücke (51) in der Bohrungslinle (I, I') durch eine Vielzahl von Zwischenlöchern (510) mit breitem Querschnitt für den Durchgang der Speichenmuttern (8) durchquert ist, wobei jedes Führungselement (9) die allgemeine Form eines Rohres mit einem Kanal (90) aufweist, der vollständig das untere Volumen (11) gemäß der Bohrungslinie (I, I') durchquert und die Zwischenlöcher (510) mit den unteren Löchern (210) verbindet, und dadurch, daß die Halteeinrichtungen (93) bezüglich der äußeren Oberfläche der Röhre vorstehen und Abstützung gegen die innere Oberfläche (51a) der Zwischenbrücke (51) nehmen.

10. Fahrradfelge gemäß einem der Ansprüche 2 bis 9, dadurch gekennzeichnet, daß das Führungselement (9) zumindest einen radial und/oder axial elastisch deformierbaren Teil aufweist.

11. Fahrradfelge gemäß Anspruch 10, dadurch gekennzeichnet, daß die Wände des Führungselementes (9) einen oder mehrere Einschnitte (97, 970, 971) aufweist, die im wesentlichen longitudinal und parallel ausgerichtet sind und/oder im wesentlichen transversal bezüglich der Bohrungslinie (I` I') ausgerichtet sind.

12. Fahrradfelge gemäß einem der Ansprüche 5 bis 11, dadurch gekennzeichnet, daß die Halteeinrichtungen aus steifen Vorsprüngen (93) bestehen, die bezüglich der Oberfläche der röhrenförmigen Wand des oberen Abschnittes (900) vorstehen.

13. Fahrradfelge gemäß einem der Ansprüche 1, 2, 3 oder 4, dadurch gekennzeichnet, daß die Halteeinrichtungen durch Zungen oder Klammern (930) gebildet sind.

14. Fahrradfelge gemäß Anspruch 13, dadurch gekennzeichnet, daß die Zungen bei der Herstellung des Führungselementes (9) vorausgeschnitten werden und dann durch ein Spezialwerkzeug entfaltet werden.

15. Fahrradfelge gemäß einem der Ansprüche 1, 2, 3 oder 4, dadurch gekennzeichnet, daß die Halteeinrichtungen durch Buckel (950) gebildet sind, die durch radiale Deformation des Führungselementes (9) erhalten sind.
